# EUROPEAN PATENT APPLICATION

(11) **EP 4 574 246 A1**
(43) Date of publication of application: **25.06.2025**
(21) Application number: 24208384.8
(22) Date of filing: 23.10.2024
(51) Int. Cl.: B01D 61/42, B01D 69/10

(54) **A DEVICE FOR ELECTRODIALYSIS AND A METHOD FOR ELECTRODIALYSIS**

(30) Priority: 21.12.2023 EP 23219564
(71) Applicant: Stichting IMEC Nederland, 5656 AE Eindhoven (NL)
(72) Inventor: MATHWIG, Klaus, 5611 ND Eindhoven (NL); ZEVENBERGEN, Marcel, 5706 GN Helmond (NL); VERSCHUEREN, Alwin Rogier Martijn, 5221 LC 's-Hertogenbosch (NL)
(74) Representative: AWA Sweden AB

(57) **Abstract**

According to an aspect of the present inventive concept there is provided a device for electrodialysis, comprising: a channel configured for receiving a flow of an electrolyte; a first electrode and a second electrode, wherein the first and second electrode are electrically connected for applying an alternating current voltage; a first ion flow controlling element being configured to allow flow of ions from a second side to a first side, the first ion flow controlling element comprising a first substrate and a first ion-exchange membrane, wherein the first substrate comprises pores; a second ion flow controlling element being configured to allow flow of ions from a second side to the a side, the second ion flow controlling element comprising a second substrate and a second ion-exchange membrane, wherein the second substrate comprises pores.

## Description

### Technical field

The present description relates to a device for electrodialysis and a method for electrodialysis.

### Background

Electrodialysis is a method to separate electrolyte ions from a solution using ion-exchange membranes. It is for instance used for desalination. A solution such as seawater is pumped into a stack of ion exchange membranes and an electric potential is applied across the stack of membranes. The combination of electric field and a cationic membrane transports cations to one side, and anions to another side through an anionic membrane so that a dilute outlet stream remains with a reduced electrolyte ion concentration. A brine solution in a neighboring stream collects up-concentrated ions.

Microscale fluidic diodes are fluidic ionic diodes rectifying the electric current of ions in solution as they are being transported through these diodes driven by an electric field. These diodes typically consist of ionomer-microhole deposits separating two reservoirs. Applying a differential electrical potential between the two reservoirs results either in a high current in forward electrical bias (high conductivity of an open diode) or a low current in reverse bias (low conductivity of blocked/closed diode).

Common systems of the prior art of electrodialysis generally suffer from non-efficient separation of ions, backflow of ions and loss of energy due to O₂ and H₂ formation on the electrodes.

Thus, there is a need form improvement in the art.

### Summary

An objective of the present description is to provide a device for electrodialysis allowing long term use. A further objective of the present description is to provide a method for electrodialysis for long term use.

These and other objectives are at least partly met by the invention as defined in the independent claims. Preferred embodiments are set out in the dependent claims.

According to an aspect, there is provided a device for electrodialysis, the device comprising:
a channel configured for receiving a flow of an electrolyte;
a first electrode and a second electrode, wherein the first and second electrode are arranged to extend along the channel and spaced apart such that the flow of the electrolyte passes between the electrodes, wherein the first and second electrode are electrically connected for applying an alternating current voltage across the first and second electrode;
a first ion flow controlling element arranged to extend along the extension of the first electrode, the first ion flow controlling element having a first side facing the first electrode and a second side facing the second electrode, the first ion flow controlling element being configured to allow flow of ions from the second side to the first side, the first ion flow controlling element comprising a first substrate and a first ion-exchange membrane, wherein the first substrate comprises pores extending through the first substrate and wherein the first ion-exchange membrane covers the pores of the first substrate;
a second ion flow controlling element arranged to extend along the extension of the second electrode, the second ion flow controlling element having a first side facing the second electrode and a second side facing the first electrode, the second ion flow controlling element being configured to allow flow of ions from the second side to the first side, the second ion flow controlling element comprising a second substrate and a second ion-exchange membrane, wherein the second substrate comprises pores extending through the second substrate and wherein the second ion-exchange membrane covers the pores of the second substrate.

Thanks to the configuration of the device, it may be driven in alternating current (AC) mode. Thanks to the use of the first ion flow controlling element and the second ion flow controlling element, the flow of ions is controlled such that there is no or very low build up of net charge at the electrodes in the device. The device combines an electrodialysis device and a microscale ionic diode. Thus, by this the flow of electrolytes may be separated into at least three parts. A dilute part of the flow is arranged between the first and second ion flow controlling elements. The parts between the electrodes and respective ion flow controlling elements will over time be filled up with ions. An advantage is that the device only needs a first and a second ion flow controlling element to feature the ion separation, thus, the setup of the device is simple and requires few components.

Further, the device may allow for effective pumping of specific cations or anions when ion-selective ion-exchange membranes are employed. Thus, the device may be used both for electrodialysis in the conventional way to control the electrolyte concentration and for effective separation of specific ions. This may for instance allow for the device to be used in an artificial kidney.

The first and second electrode are arranged to separate the flow of electrolytes. Further, the first and second electrode are configured for applying an alternating current voltage across the channel between the first and second electrodes.

Electrode actuation may range from potential differences (peak-to-peak voltages) of 100 mV to several kV depending on geometry of the device for electrodialysis. Alternatively, the first and second electrodes are actuated using AC currents. The AC currents may be in the range of µA to even several A, depending on the number of ions to be filtered. The frequencies may be optimized such that they are slow enough to enable an ion flow over the first and second ion flow controlling elements. The frequencies may range from 1 Hz to 10 kHz, and frequencies include 50 Hz and 60 Hz.

The first and second electrode may comprise platinum (black), gold, silver/silver-chloride, carbon, diamond, ruthenium, titanium or steel. The first and second electrode may be supercapacitors. The first and second electrodes may be microfabricated or printed on sheets, or they may be conductive sheets as a whole, or a mesh or a wire.

The flow of electrolytes is allowed into the channel. The electrolyte thus has the same electrolyte concentration throughout a cross-section at the start of the channel.

The channel is divided into at least three parts, by the first ion flow controlling element and the second ion flow controlling element. The part of the channel between the first ion flow controlling element and the second ion controlling element may be called the dilute part of the channel.

The at least three channels may each have a width of 10 µm to 1 cm.

The first and/or second ion-exchange membrane may respectively be an ion-exchange membrane which is configured for separating anions from cations.

The first and/or second ion-exchange membrane may further, respectively be an ion-selective membrane configured such that the first and second ion-exchange membrane comprises ionophores. If so, the membrane can separate a type of cations from other cations or a specific anion from other anions.

The first and second ion-exchange membranes are configured such that they are selective for one type of ions. Thus, the first and second ion-exchange membranes will, respectively, be selective for a type of ion such that the specific type of ion will be absorbed from the flow of electrolytes to the respective first and second ion-exchange or ion-selective membrane.

The specific type of ion may be a cation or an anion. However, in the case of an ion-selective membrane the specific ion may be a specific cation or a specific anion.

As an example, the first ion-exchange membrane may be selective for anions and the second ion-exchange membrane is selective for cations. Then, anions from the flow of electrolytes will to a large extent be absorbed from the dilute channel to the first ion-exchange membrane. Cations from the flow of electrolytes will to a large extent be absorbed from the dilute channel to the second ion-exchange membrane.

As an additional example, the first membrane is an ion-selective membrane selective for sodium ions Na⁺. These Na⁺ cations are absorbed by the ion-selective membrane, while other cations such as potassium ions, K⁺, are retained in the dilute part of the channel.

When a forward electrical bias is applied over the first and second ion flow controlling element, the ions flow through the pores of the first and second substrate, respectively. Cations may travel in a direction towards a negative electrode, while anions travel in a direction towards a positive electrode. This may be called an open state of the pores. During the open state, ions may flow in through the first and second ion flow controlling element in both directions depending on the charge of the respective first and second electrode.

Following the examples above, a positive potential is applied over the first electrode and a negative potential is applied over the second electrode, in the forward bias. The anions from the first ion-selective membrane will then flow through the pores of the first substrate into the part of the channel between the first ion flow controlling element and the first electrode. Cations from the second ion-selective membrane will simultaneously flow through the pores of the second substrate into the part of the channel between the second ion flow controlling element and the second electrode. Consequently, ion concentrations are depleted in the dilute part channel, and ions accumulate and ion concentrations are enriched in the part of the channel in between the first electrode and first ion-exchange membrane as well as in the part of the channel in between second ion-exchange membrane and the second electrode.

When the bias is reversed, and a negative potential is applied over the first electrode and a positive potential is applied over the second electrode, the movement of ions will change direction. Driven by this potential, cations exit the pores at the first ion-exchange membrane in the direction towards the part of the channel between the first electrode and the first ion-exchange membrane faster than they can enter from the first ion-exchange membrane into these pores - because only a negligibly small amount of electrolyte cations is absorbed in the first anion-selective ion-exchange membrane. Consequently, the pores at the first ion-exchange membrane are depleted of cations. As electroneutrality is maintained in the pores, i.e., the net charge of all electrolyte ions amounts to zero, also no anions are present in the pores. At the second ion-exchange membrane, anions exit the pores towards the part of the channel between the second ion-exchange membrane and the second electrode faster than they can by replenished from the second ion-exchange membrane, and the pores at the second ion-exchange membrane are also depleted of both cations and anions.

Thus, when the bias is reversed, and a negative potential is applied over the first electrode and a positive potential is applied over the second electrode, the movement of ions will change direction, and ions are driven out of the pores.

By this, the pores of the substrate are effectively closed to ion transport since a negligibly small amount of ions is present in these pores. This will prevent ions from going back through the membrane and into the dilute part of the channel.

By this, the dilute channel is diluted of ions while the part of the channel between the first ion flow controlling element and the first electrode will over time be enriched in anions and the part of the channel between the second ion flow controlling element and the second electrode will be enriched in cations. An advantage of this is that the device effectively may separate ions.

It should of course be understood that the anion/cation-selectivity of the first and second ion-exchange membrane, as well as the potential over the first and second electrodes in the forward and reversed bias may be the opposite.

The first and second ion flow controlling element thus enables preferential transport of types of ions, as a function of polarization of the first and second electrodes and orientation of the ion flow controlling element.

The first ion-exchange membrane and the second ion-exchange membrane may be characterized by the properties of porosity and permanent electrical charge. Thus, there is a net positive or negative charge density of electrical charges immobilized at the ion-exchange membranes. The porosity of the ion-selective membrane enables ion transport.

The first ion-exchange membrane and the second ion-exchange membrane may be selective for the same kind of ions or different kind of ions, i.e., they may be ion-selective ion-exchange membranes or, in short, ion-selective membranes. The first ion-selective membrane and/or the second ion-selective membrane may be selective for Na⁺, K⁺, NH₄⁺, Cl⁻, Ca²⁺, Pb²⁺ or Mg²⁺ ions. For example, the first ion-selective membrane may as an example be selective for sodium, Na⁺, while the second membrane is an anion-selective ion-exchange membrane.

The first ion-selective membrane and/or the second ion-selective membrane may as well be selective for anions such as Cl⁻, Br-, CN⁻, I⁻, F⁻, NO₃⁻. For example, the first ion-selective membrane may be selective for chloride, Cl⁻, while the second membrane is a cation-selective ion-exchange membrane. By this, the device may be used for separating chloride from bromide, while at the same time diluting the flow of electrolytes. In other words, the first and second ion-selective ion-exchange membranes may exhibit a high selectivity for one kind of ions over ither kinds of ions. By that, only the specific kind of ion may pass over the respective ion-selective membrane.

The ion-exchange or ion-selective membrane may have a thickness of 5 nm to 1 mm.

The pores of the first substrate and the pores of the second substrate may be a single pore or an array of pores. An array of pores may be arranged, e.g., in a hexagonal or rectangular pattern, or in an irregular pattern.

The density of pores, in other words the pore-to-pore distance, may be optimized toward effectiveness of ion separation and efficiency in electrodialysis. I.e., pore-to-pore distances may advantageously be as short as possible to have high ion flux per surface area but should be large enough so that individual pores do not interfere with one another. The ratio of hole diameter to pore-to-pore distance may range from approximately 1:1 to 1:100.

The pores may be defined and fabricated in the first substrate and in the second substrate by various methods including wet etching, dry/plasma etching, substrate moulding (soft lithography), photolithography, injection moulding, additive manufacturing, laser cutting, track etching, electrochemical etching, photoelectrochemical etching, or mechanical punching.

The first ion-exchange membrane may be combined with the first substrate and the second ion-selective membrane may be combined with the second substrate by the use of drop casting, spin coating, lamination, mechanical clamping, gluing, and/or bonding.

The first ion-exchange membrane may extend into the pores of the first substrate. The second ion-selective membrane may extend into the pores of the second substrate.

The device may be used for electrodialysis and desalination, ion pumping and ion filtering, medical dialysis, such as for artificial kidneys, separation science and engineering, filtering, ion sensing and analytical chemistry, iontronics, and energy-harvesting systems.

According to one embodiment, the first substrate may be arranged at the first side of the first ion flow controlling element and the first ion-exchange membrane may be arranged at the second side of the first ion flow controlling element, wherein the second substrate ay be arranged at the first side of the second ion flow controlling element and the second ion-exchange membrane may be arranged at the second side of the second ion flow controlling element.

This allows for a sufficient depletion of ions from the channel between the first ion-exchange membrane and the second ion-exchange membrane.

According to an embodiment, the first substrate is arranged at the second side of the first ion flow controlling element and the first ion-exchange membrane is arranged at the first side of the first ion flow controlling element, wherein the second substrate is arranged at the second side of the second ion flow controlling element and the second ion-exchange membrane is arranged at the first side of the second ion flow controlling element.

In this embodiment, when an AC potential is applied between the first and second electrode, ions will be accumulated in the part of the channel part between the first ion flow controlling element and the second ion controlling element, and ions will be depleted in the part of the channel in between the first electrode and the first ion-exchange membrane as well as in part of the channel in between the second electrode and the second ion-exchange membrane. Thus, these two parts of the channel become dilute channels.

According to one embodiment the first ion-exchange membrane may comprise at least a first portion and a second portion, wherein the first portion and the second portion may be selective for different kinds of ions and wherein the second ion-exchange membrane may comprise at least a first portion and a second portion, wherein the first portion and the second portion may be selective for different kinds of ions.

By this, the first ion flow controlling element may be selective for two kinds of ions, and the second ion flow controlling element may be selective for two kinds of ions. For example, the first portion of the first ion-exchange membrane may be selective for a cation and the second portion of the first ion-exchange membrane may be selective for an anion. The same is applied for the second ion-exchange membrane. Then, under forward bias, cations may flow through the first portion of the second ion flow controlling element being close to the negatively charged second electrode, while anions may flow through the second portion of the first ion flow controlling element close to the positively charged first electrode. In reverse bias, the anions will flow through the second portion of the second ion flow controlling element being close to the positively charged second electrode, while cations may flow through the first portion of the first ion flow controlling element close to the negatively charged first electrode. As is discussed above, the ion-exchange membrane will in one bias allow flow of ions in the direction of the applied charge and in the reversed bias suppress the flow of ions due to low electrolyte concentration and, thus, low conductivity of the pores. By having the first portion and the second portion of the ion-selective membrane being selective for cations and anions, respectively, no net charge of ions will be built up in the part of the channel between the first ion flow controlling element and the first electrode or in the part of the channel between the second ion flow controlling element and the second electrode, respectively, while still diluting the flow of electrolyte between the first and second ion flow controlling elements.

This is an advantage compared to the prior art, where accumulation of charges in electrodialysis may affect the efficiency of the process. It is an advantage compared to the prior art that the device only needs two ion flow controlling elements, but still may maintain charge neutrality.

As an example, the first portion of the first ion-exchange membrane may be selective for a first cation and the second portion of the first ion-exchange membrane may be selective for a first anion. At the same time, the first portion of the second ion-exchange membrane is selective for a second cation and the second ion-exchange membrane is selective for a second anion. The first cation and the second cation may be different cations. The first anion and the second anion may be different anions. However, the cations may be the same kind of cations and the anions may be the same kind of anions.

According to one embodiment the first portion of the first ion-exchange membrane and the first portion of the second ion-exchange membrane may have the same ion selectivity, and wherein the second portion of the first ion-exchange membrane and the second portion of the second ion-exchange membrane may have the same ion selectivity.

By this, efficient removal of the ions is acquired.

However, it should be understood that the first portion of the first ion-exchange membrane and the first portion of the second ion-exchange membrane may have different ion selectivity as well. The second portion of the first ion-exchange membrane and the second portion of the second ion-exchange membrane may as well have different ion selectivity.

According to one embodiment the first ion-exchange membrane may comprise a plurality of first portions and a plurality of second portions arranged in an alternate configuration and wherein the second ion-exchange membrane may comprise a plurality of first portions and a plurality of second portions arranged in an alternate configuration.

By this, the flow of electrolyte will be subjected to a plurality of first portions or second portions of ion-exchange membranes. Thus, the separation of ions from the dilute and the eventual separation of specific ions may be improved.

According to one embodiment the device may further comprise a bypass channel connecting the space between the first electrode and the first side of the first ion flow controlling element to the space between the second electrode and the first side of the second ion flow controlling element.

This may allow for the electrolyte accumulated in the space between the first electrode and the first side of the first ion flow controlling element to travel to the space between the second electrode and the first side of the second ion flow controlling element, or vice versa. By this, any net charge between the two spaces may be reduced, and electroneutrality is kept.

The bypass channel may comprise a valve, such as a fluidic valve for opening and closing the passage through the channel. The valve may for instance be open while no or low voltage is applied over the device.

According to one embodiment the first portion of the first ion-exchange membrane may be opposite to the second portion of the second ion-exchange membrane and wherein the second portion of the first ion-exchange membrane may be opposite to the first portion of the second ion-exchange membrane.

An advantage of this is that the ion flow over the first ion-selective membrane and the second ion-selective membrane is more efficient, because both ion flow controlling elements opposite of one another are always either both open or both closed.

According to one embodiment at least a portion of the first ion-exchange membrane may be selective for cations and at least a portion of the second ion exchange membrane may be selective for anions.

In case the first membrane comprises a first portion and a second portion, at least one of the first portion and the second portion is selective for cations.

According to one embodiment at least a portion of the first ion-exchange membrane is selective for a specific ion.

Further, at least a portion of the second ion exchange membrane may be selective for a second specific ion.

For example, at least a portion of the first ion-selective membrane may be selective for Na⁺ ions. By this, the first ion-selective membrane selectively passes Na⁺ ions and blocks other ions.

For example, at least a portion of the second ion-selective membrane may be selective for Na⁺ ions. By this, the second ion-selective membrane selectively passes Na⁺ ions and blocks other ions. Alternatively, the selectivity may be selective for K⁺ ions. If so the second ion-selective membrane selectively passes K⁺ ions and blocks other ions.

The first and second ion-selective membrane may be selective for different ions, such that different ions are selectively passing the first and second ion flow controlling element, respectively. By this, not only is the dilute channel diluted from ions but ions are also selectively gathered in the side channels.

According to one embodiment the device may comprise a third ion flow controlling element arranged to extend along the extension of the first electrode, the third ion flow controlling element may be arranged between the first ion flow controlling element and the first electrode, the third ion flow controlling element having a first side facing the first ion flow controlling element and a second side facing the first electrode, the third ion flow controlling element being configured to allow flow of ions from the second side to the first side, the third ion flow controlling element comprising a third substrate and a third ion-exchange membrane, wherein the third substrate comprises pores extending through the third substrate and wherein the third ion-exchange membrane covers the pores of the third substrate, the third substrate facing the first substrate of the first ion flow controlling element, wherein the device may further comprise a fourth ion flow controlling element arranged to extend along the extension of the second electrode, the fourth ion flow controlling element may be arranged between the second ion flow controlling element and the second electrode, the fourth ion flow controlling element having a first side facing the second ion flow controlling element and a second side facing the second electrode, the fourth ion flow controlling element being configured to allow flow of ions from the second side to the first side, the fourth ion flow controlling element comprising a fourth substrate and a fourth ion-exchange membrane, wherein the fourth substrate comprises pores extending through the fourth substrate and wherein the fourth ion-exchange membrane covers the pores of the fourth substrate, the fourth substrate facing the second substrate of the second ion flow controlling element.

Thus, more than two ion flow controlling elements may be stacked, i.e., they may be arranged in a parallel manner so that there are more than three parts of a channel. This stacking may allow for better performance ion separation, for example, it may allow for a higher energy efficiency.

In other words, the device may comprise a fifth, sixth, seventh, eight and so on ion flow controlling element. The additional elements should be arranged to extend along the extension of the already present ion flow controlling elements. The additional elements have similarities with the previous ion flow controlling elements, such that they comprise a first side and a second side, and being configured to selectively allow flow of ions from the first side to the second side, or vice versa,

Preferably, the device should be symmetric, in the sense that the number of ion flow controlling elements is even.

The number of channels may be 4, 5, 6, 7, 8, 9, or 10 channels.

According to one embodiment the first substrate and the second substrate may comprise polymers, such as polyethylene terephthalate (PET), poly(methyl methacrylate) (PMMA), polytetrafluoroethylene (PTFE, Teflon), or cyclic olefin copolymer (COC), polyimide (Kapton), or glass, silicon or oxidized, silicon, or silicon or another solid-state material.

Accordingly, the first substrate and the second substrate may comprise an inert material.

Thus, the first and the second substrate may not be part of the ion blocking provided by the ion-exchange membrane.

According to one embodiment the surface area of the device may be 10 µm² to 10 m².

The surface area of the device may depend on the application of the device. For instance, a single device may have a surface area of 10 um². For medical dialysis, the device may have a surface area or 1 to 100 cm². For seawater desalination, the device may have a surface area of 0.1 to 10 m².

According to one embodiment the pores of the first substrate and the pores of the second substrate have a diameter of 10 nm to 1 mm.

The cross section of the pores can for instance be circular/disc-shaped, rectangular, quadratic, or irregular. The cross section can be constant along the length of the hole. Alternatively, the cross-section or diameter can change along length of the pore, e.g., a tapered pore.

According to one embodiment, the thickness of the first substrate and the second substrate are 100 nm to 1 mm. Preferably, according to an embodiment, the thickness of the substrate is identical to the length of the pores.

According to one embodiment the first ion-selective membrane and the second ion-selective membrane may comprise Nafion, Sustainion, Aquivion, polymers of intrinsic porosity, such as intrinsically microporous polyamine PIM-EA-TB, polyacrylonitrile, Fumasep, cellulose, or other proton-exchange membrane materials.

Thus, the first ion-selective membrane and the second ion-selective membrane may be any cation- or anion-selective material.

If the first ion-selective membrane and/or the second ion-selective membrane are selective for a certain kind of ion, the first ion-selective membrane and/or the second ion-selective membrane may comprise a polymeric matrix such as polyvinyl chloride (PVC), siloprene, silicon rubber, polyurethane, acrylate, perfluoropolymers and others, and ionophores. Ionophores are materials with specific high selectivity for monovalent or divalent cation or anions such as Na⁺, K⁺, NH₄⁺, Ca²⁺, Mg²⁺, Cl⁻, Br⁻, CN⁻, I⁻, F⁻, or NO₃⁻. Typical examples for ionophores are valinomycin, calimycin, nonactin, crown-ether based ionophores and others.

According to one embodiment the device may have a parallel-plate configuration.

Thus, the first and second electrode each comprises a plate. The first and second electrode are arranged parallel to each other. The first and second ion flow controlling elements are arranged between and parallel to the respective first and second electrode.

According to one embodiment the device may have a coaxial configuration.

The first electrode may then be arranged as a mantle surface of a first cylinder, and the second electrode may be arranged as a mantle surface of a second cylinder, the second cylinder being coaxially arranged inside the first cylinder. The first and second ion flow controlling elements are then arranged as a third and fourth mantle surface of a cylinder, respectively. The third and fourth cylinder being coaxially arranged inside the first but surrounding the second cylinder.

The choice of configuration, between parallel-plate and coaxial configuration may be made by application basis. Depending on the application, the stackability, manufacturability and ease of integration together with other devices may decide what configuration to choose.

According to another aspect, there is provided a method for electrodialysis, the method comprising:
receiving a flow of an electrolyte in a channel;
applying an alternating current voltage across a first electrode and a second electrode, wherein the first and second electrode are arranged to extend along the channel and spaced apart such that the flow of the electrolyte passes between the electrodes;
controlling flow of ions from a second side to a first side of a first ion flow controlling element, wherein the first ion flow controlling element is arranged to extend along the extension of the first electrode, the first ion flow controlling element having a first side facing the first electrode and a second side facing the second electrode, the first ion flow controlling element comprising a first substrate and a first ion-exchange membrane, wherein the first substrate comprises pores extending through the first substrate and wherein the first ion-exchange membrane covers the pores of the first substrate;
controlling flow of ions from a second side to a first side of a second ion flow controlling element arranged to extend along the extension of the second electrode, the second ion flow controlling element having a first side facing the second electrode and a second side facing the first electrode, the second ion flow controlling element comprising a second substrate and a second ion-exchange membrane, wherein the second substrate comprises pores extending through the second substrate and wherein the second ion-exchange membrane covers the pores of the second substrate.

This aspect may generally present the same or corresponding advantages as the former aspect.

The flow of electrolytes is allowed into the channel. The electrolyte thus has the same electrolyte concentration throughout a cross-section at the start of the channel.

The first and second ion-exchange membranes are configured such that they are selective for one type of ion. Thus, the first and second ion-exchange membranes will, respectively, be selective for a type of ion such that the specific type of ion will be absorbed from the flow of electrolytes to the respective first and second ion-exchange membrane.

As an example, the first ion-exchange membrane may be selective for anions and the second ion-exchange membrane is selective for cations. Then, anions from the flow of electrolytes will to a large extent be absorbed from the dilute channel to the first ion-exchange membrane. Cations from the flow of electrolytes will to a large extent be absorbed from the dilute channel to the second ion-exchange membrane.

When a forward electrical bias of the alternate current voltage is applied over the first and second ion flow controlling element, the ions flow through the pores of the first and second substrate, respectively. Cations may travel in a direction towards a negative electrode, while anions travel in a direction towards a positive electrode. This may be called an open state of the pores. During the open state, ions may flow in through the first and second ion flow controlling element in both directions depending on the charge of the respective first and second electrode.

Following the example above, a positive potential is applied over the first electrode and a negative potential is applied over the second electrode, in the forward bias of the alternate current. The anions from the first ion-exchange membrane will then flow through the pores of the first substrate into the part of the channel between the first ion flow controlling element and the first electrode. Cations from the second ion-exchange membrane will simultaneously flow through the pores of the second substrate into the part of the channel between the second ion flow controlling element and the second electrode.

When the bias of the alternate current is reversed, and a negative potential is applied over the first electrode and a positive potential is applied over the second electrode, the ions will change direction. However, electrolyte ion concentration in the pores and, thus, conductivity of the pores will be lowered. By this, the pores of the substrate are effectively closed since only a small amount of ions will pass the ion flow controlling elements. This will prevent fouling of the device as well as gas formation.

By this, the dilute channel is diluted of ions while the part of the channel between the first ion flow controlling element and the first electrode will over time be enriched in anions and the part of the channel between the second ion flow controlling element and the second electrode will be enriched in cations.

It should of course be understood that the ion-selectivity of the first and second ion-exchange membrane, as well as the potential over the first and second electrodes in the forward and reversed bias may be the opposite.

The first and second ion flow controlling element enables preferential transport of types of ions, as a function of polarization of the first and second electrodes and orientation of the element.

### Brief description of the drawings

The above, as well as additional objects, features, and advantages of the present description, will be better understood through the following illustrative and non-limiting detailed description, with reference to the appended drawings. In the drawings like reference numerals will be used for like elements unless stated otherwise.
Fig. 1a is a cross section of a parallel plate device according to a first embodiment.
Fig. 1b is a cross section of a coaxial device according to a second embodiment.
Fig. 1c is a cross section of a parallel plate device according to a first embodiment.
Fig. 2a is a cross section of a parallel plate device according to a third embodiment.
Fig. 2b is a cross section of a coaxial device according to a fourth embodiment.
Fig. 3a is a cross section of a parallel plate device according to the present invention.
Fig. 3b is a cross section of a parallel plate device according to the present invention.

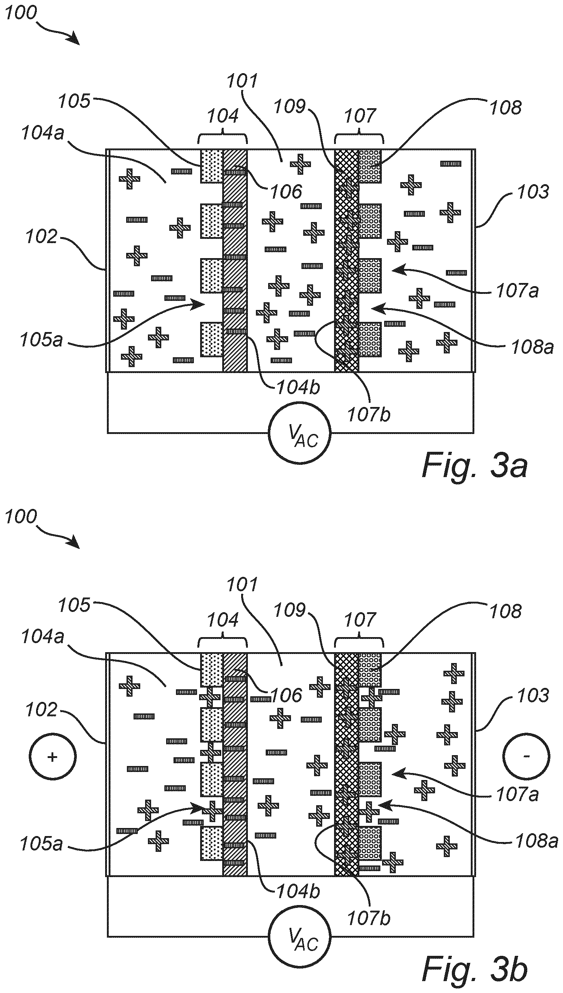

Fig. 3b is a cross section of a parallel plate device according to the present invention.

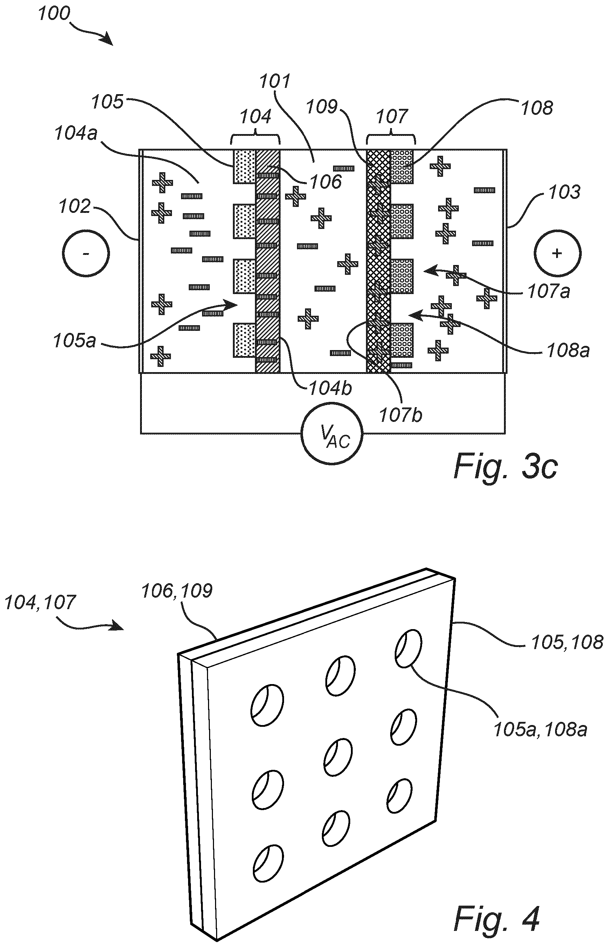

Fig. 4 is a cross section of an ion flow controlling element according to an embodiment.

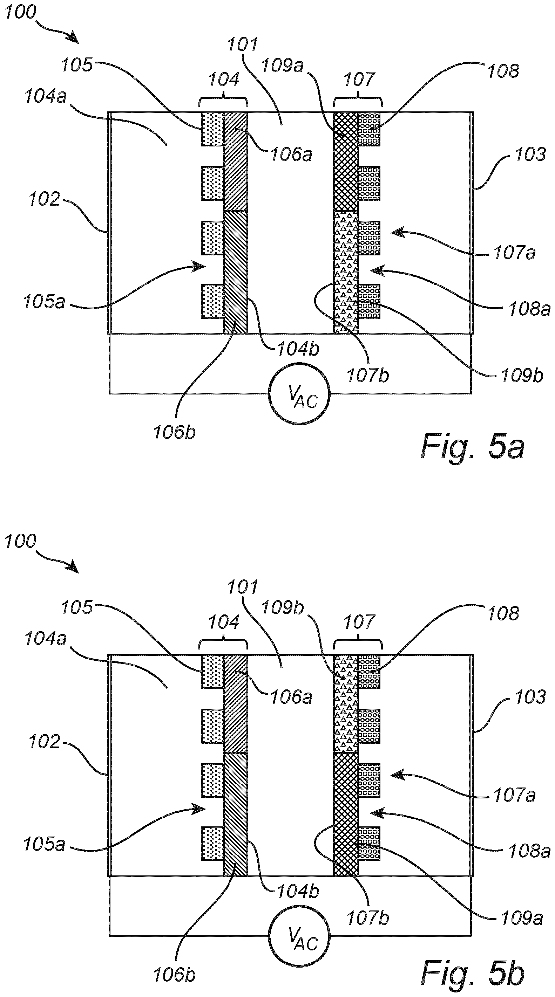

Fig. 5a is a cross section of a parallel plate device according to the present invention.
Fig. 5b is a cross section of a parallel plate device according to the present invention.

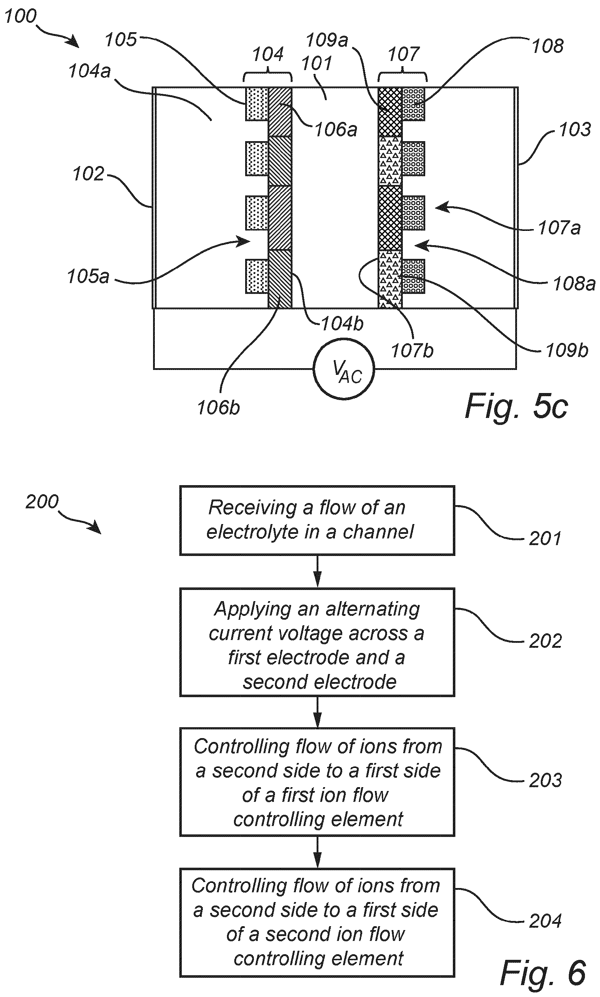

Fig. 5c is a cross section of a parallel plate device according to the present invention.
Fig. 6 is a flow chart of a method according to an embodiment.

### Detailed description

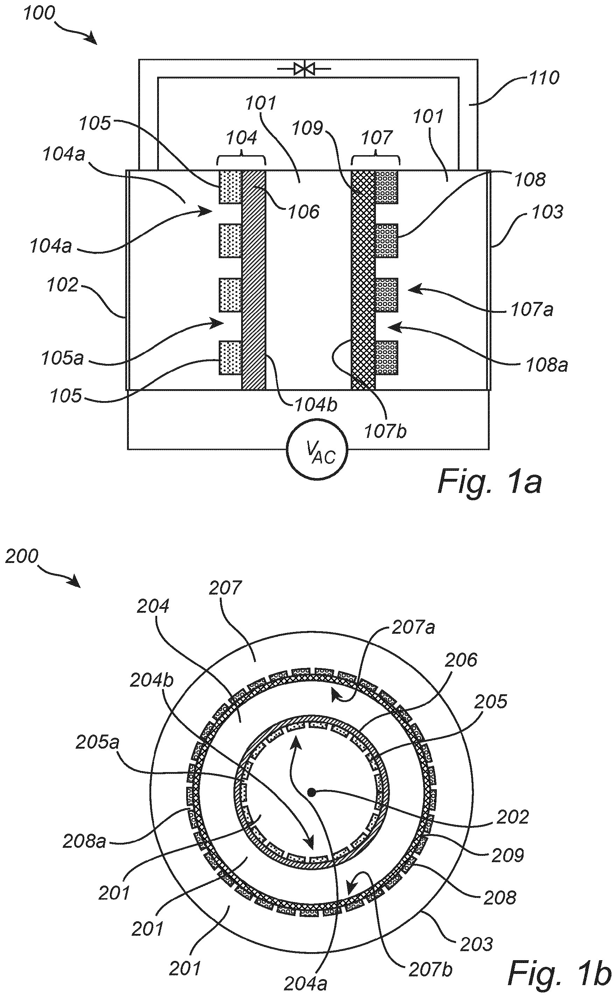

Fig 1a illustrates the device 100 for electrodialysis in a parallel-plate configuration.

The device 100 comprises a channel 101 configured for receiving a flow of an electrolyte. The flow of electrolytes is allowed into the channel 101. The electrolyte thus has the same electrolyte concentration throughout a cross-section at the start of the channel 101. When flowing through the channel 101, the concentration of the electrolyte changes in relation to the voltage applied and the function of the first ion flow controlling element 104 and the second ion flow controlling element 107, being discussed below.

The device 100 further comprises a first electrode 102 and a second electrode 103. The first 102 and second electrode 103 are arranged to extend along the channel 101. The first 102 and second 103 electrode are spaced apart such that the flow of the electrolyte passes between the electrodes 102, 103. The first 102 and the second electrode 103 are electrically connected for applying an alternating current voltage across the channel 101 between the first 102 and second 103 electrode.

Electrode actuation may range from potential differences (peak-to-peak voltages) of 100 mV to several kV depending on geometry of the device for electrodialysis 100. Alternatively, the first 102 and second 103 electrodes are actuated using AC currents. The AC currents may be in the range of µA to even several A, depending on the number of ions to be filtered. The frequencies may be optimized such that they are slow enough to enable an ion flow over the first and second ion flow controlling elements. The frequencies may range from 1 Hz to 10 kHz, and frequencies include 50 Hz and 60 Hz.

The first 102 and second 103 electrode may comprise platinum (black), gold, silver/silver-chloride, carbon, diamond, ruthenium, titanium or steel. The first 102 and second 103 electrode may be supercapacitors. The first 102 and second 103 electrodes may be microfabricated or printed on sheets, or they may be conductive sheets as a whole, or a mesh or a wire.

The device 100 further comprises a first ion flow controlling element 104 and a second ion flow controlling element 107. The first ion controlling element 105 is arranged to extend along the extension of the first electrode 102 and the second ion flow controlling element 107 is arranged to extend along the extension of the second electrode 103.

The channel 101 is thus divided into at least three parts, by the first ion flow controlling element 104 and the second ion flow controlling element 107. The part of the channel 101 between the first ion flow controlling element 104 and the second ion controlling element 107 may be called the dilute part of the channel 101.

The at least three parts of the channel may each have a width of 10 µm to 1 cm.

The first ion flow controlling element 104 has a first side 104a facing the first electrode 102 and a second side 104b facing the second electrode 103.

The first ion flow controlling element 104 is configured to allow flow of ions from the second side 104b to the first side 104a. Thus, when the flow of electrolytes flows through the channel 101, the ions may flow from the second side 104b to the first side 104a of the first ion flow controlling element 104. Thus, the ions may flow from the dilute part of the channel to the part of the channel between the first ion flow controlling element 104 and the first electrode 102.

The first ion flow controlling element 104 comprises a first substrate 105. The first substrate 105 comprises pores 105a extending through the first substrate 105.

The pores are further disclosed in relation to Fig. 4 below.

The first ion flow controlling element 104 further comprises a first ion-exchange membrane 106. The first ion-selective membrane 106 covers the pores 105a of the first substrate 105. The first ion-exchange membrane 106 may have a thickness of 5 nm to 1 mm.

The first substrate (105) is arranged at the first side (104a) of the first ion flow controlling element (104) and the first ion-exchange membrane (106) is arranged at the second side (104b) of the first ion flow controlling element (104).

The second ion flow controlling element 107 has a first side 107a facing the second electrode 103 and a second side 107b facing the first electrode 102. The second ion flow controlling element 107 are configured to allow flow of ions from the second side 107b to the first side 107a. Thus, when the flow of electrolytes flows through the channel 101, the ions may flow from the second side 107b to the first side 107a of the second ion flow controlling element 107. Thus, the ions may flow from the dilute part of the channel to the outer part of the channel between the second ion flow controlling element 107 and the second electrode 103.

The second ion flow controlling element 107 comprises a second substrate 108. The second substrate 108 comprises pores 108a extending through the second substrate 108.

The second ion flow controlling element 107 further comprises a second ion-exchange membrane 109. The second ion-exchange membrane 109 covers the pores 108a of the second substrate 108. The second ion-exchange membrane 108 may have a thickness of 5 nm to 1 mm.

The second substrate 108 is arranged at the first side 107a of the second ion flow controlling element 107 and the second ion-exchange membrane 109 is arranged at the second side 107b of the second ion flow controlling element 107.

The first 104 and second 107 ion flow controlling element enables preferential transport of types of ions, as a function of polarization of the first 102 and second 103 electrodes and orientation of the ion flow controlling element 104, 107.

The first ion-exchange membrane 106 and the second ion--exchange membrane 109 may be characterized by the properties of porosity and permanent electrical charge. Thus, there is a net positive or negative charge density of electrical charges immobilized at the ion-exchange membranes 106, 109. The porosity of the ion-exchange membrane 106, 109 enables ion transport.

The first ion-exchange membrane 106 and the second ion-exchange membrane 109 may be selective for the same kind of ions or different kind of ions. The first ion-selective membrane 106 and/or the second ion-selective membrane 109 may be selective for Na⁺, K⁺, NH₄⁺, Cl⁻, Ca²⁺, or Mg²⁺ ions. For example, the first ion-selective membrane 106 may as an example be selective for sodium, Na⁺, while the second ion-selective membrane 109 is selective for potassium, K⁺. By this, the device may be used for separating sodium from potassium, while at the same time diluting the flow of electrolytes.

In other words, the first 106 and second 109 ion-selective membranes may exhibit a high selectivity for one kind of ions over ither kinds of ions. By that, only the specific kind of ion may pass over the respective ion-selective membrane 106, 109. Ion-selective specificity is achieved, for example, due to ionophores positioned within the membranes.

The first ion-exchange membrane 106 and the second ion-exchange membrane 109 may comprise Nafion, Sustainion, Aquivion, polymers of intrinsic porosity, such as intrinsically microporous polyamine PIM-EA-TB, polyacrylonitrile, Fumasep, cellulose, or other proton-exchange membrane materials.

Thus, the first ion-exchange membrane 106 and the second ion-selective membrane 109 may be any cation- or anion-selective material.

If the first ion-exchange membrane 106 and/or the second ion-exchange membrane 109 are selective for a certain kind of ion, the first ion-exchange membrane 106 and/or the second ion--exchange membrane 109 may comprise a polymeric matrix such as polyvinyl chloride (PVC), siloprene, silicon rubber, polyurethane, acrylate, perfluoropolymers and others, and ionophores. Ionophores are materials with specific high selectivity for monovalent of divalent cation or anions such as Na⁺, K⁺, NH₄⁺, Cl⁻, Ca²⁺, or Mg²⁺. Typical examples for ionophores are valinomycin, calimycin, nonactin, crown-ether based ionophores and others.

The first ion-exchange membrane 106 may be combined with the first substrate 105 and the second ion-exchange membrane 109 may be combined with the second substrate 108 by the use of drop casting, spin coating, lamination, mechanical clamping, gluing, and/or bonding.

The first ion-exchange membrane 106 and the second ion-exchange membrane 109 will be more discussed in relation to Fig 4.

Fig 1b illustrates the device 100 for electrodialysis in a coaxial configuration. The coaxial configuration works essentially in the same manner as the device in Fig 1a and will not be discussed in detail.

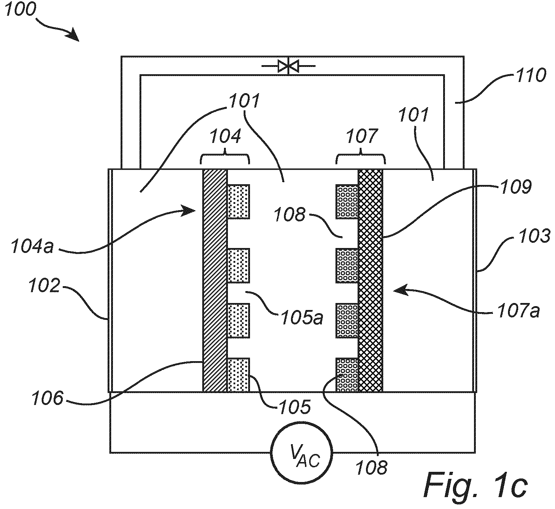

Fig 1c illustrates the device 100 for electrodialysis in a parallel-plate configuration. The device 100 of Fig. 1a have many similarities with the device 100 of Fig 1c and will not be discussed in detail. The difference between the device 100 of Fig. 1a and Fig. 1c is that in Fig 1c, the first substrate 105 is arranged at the second side 104b of the first ion flow controlling element 104 and the first ion-exchange membrane 106 is arranged at the first side 104a of the first ion flow controlling element 104, wherein the second substrate 108 is arranged at the second side 107b of the second ion flow controlling element 107 and the second ion-exchange membrane 109 is arranged at the first side 107a of the second ion flow controlling element 107.

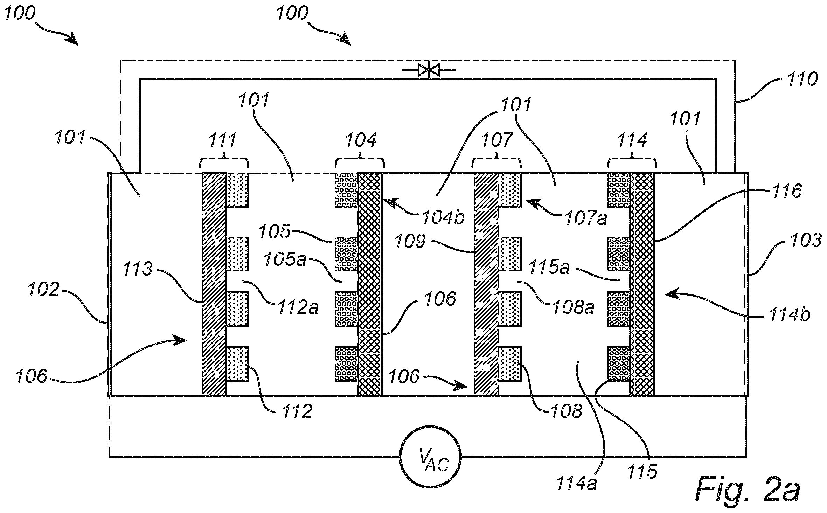

Fig 2a illustrates the device 100 for electrodialysis in a parallel-plate configuration. For simplicity, only the differences between Fig. 1a will be discussed.

The device 100 comprises a third ion flow controlling element 111 arranged to extend along the extension of the first electrode 102. The third ion flow controlling element 111 being arranged between the first ion flow controlling element 104 and the first electrode 102. The third ion flow controlling element 111 having a first side 111a facing the first ion flow controlling element 104 and a second side 111b facing the first electrode 102. The third ion flow controlling element 111 being configured to allow flow of ions from the second side 111b to the first side 111a. The third ion flow controlling element 111 comprising a third substrate 112 and a third ion-exchange membrane 113. The third substrate 112 comprises pores 112a extending through the third substrate 112. The third ion-exchange membrane 113 covers the pores 112a of the third substrate 112. The third substrate 112 faces the first substrate 105 of the first ion flow controlling element 104.

The device 100 further comprises a fourth ion flow controlling element 114 arranged to extend along the extension of the second electrode 103. The fourth ion flow controlling element 114 being arranged between the second ion flow controlling element 107 and the second electrode 103. The fourth ion flow controlling element 114 having a first side 114a facing the second ion flow controlling element 107 and a second side 114b facing the second electrode 103. The fourth ion flow controlling element 114 being configured to allow flow of ions from the second side 114b to the first side 114a. The fourth ion flow controlling element 114 comprising a fourth substrate 115 and a fourth ion-exchange membrane 116. The fourth substrate 115 comprises pores 115a extending through the fourth substrate 115. The fourth ion-exchange membrane 116 covers the pores 115a of the fourth substrate 115. The fourth substrate 115 faces the second substrate 108 of the second ion flow controlling element 107.

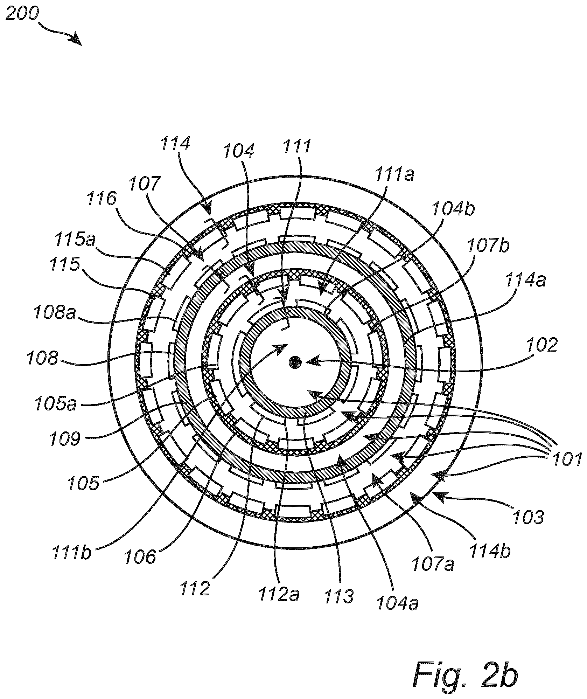

Fig 2b illustrates the device 100 for electrodialysis in a coaxial configuration. The coaxial configuration works essentially in the same manner as the device in Fig 2a and will not be discussed in detail.

Now, the function of the device 100 will be discussed in relation to Fig. 3a and b. Fig. 3a, b and c illustrates three timepoints.

Fig 2a discloses the device at the start, before any current has been applied. The flow electrolyte is identical over the entire channel 101.

The first 106 and second 109 ion-exchange membranes are configured such that they are selective for one type of ion. Thus, the first 106 and second 109 ion-exchange membranes will, respectively, be selective for a type of ion such that the specific type of ion will be absorbed from the flow of electrolytes to the respective first 106 and second 109 ion-exchange membrane. The selectivity of the membranes will be even more discussed in relation to Fig. 5.

As an example, the first ion-exchange membrane 106 may be selective for anions, as can be seen as the accumulation of the anions to the first ion-selective membrane 106. The second ion-selective membrane 109 is selective for cations, as can be seen by the accumulation of the cations to the second ion-selective membrane 109. Thus, anions from the flow of electrolytes will to a large extent be absorbed from the dilute channel to the first ion-exchange membrane 106. Cations from the flow of electrolytes will to a large extent be absorbed from the dilute channel to the second ion-exchange membrane 109.

Fig. 3b illustrates when a forward electrical bias is applied over the first 104 and second 107 ion flow controlling element, such that the ions flow through the pores 105a, 108a of the first 105 and second 108 substrate, respectively. Cations may travel in a direction towards a negative electrode, while anions travel in a direction towards a positive electrode. This may be called an open state of the pores. During the open state, ions may flow in through the first 104 and second 106 ion flow controlling element in both directions depending on the charge of the respective first 102 and second 103 electrode.

Following the example above, a positive potential is applied over the first electrode 102 and a negative potential is applied over the second electrode 103, in the forward bias of the alternate current. The anions from the first ion-exchange membrane 106 will then flow through the pores 105a of the first substrate 105 into the part of the channel between the first ion flow controlling element 104 and the first electrode 102. Cations from the second ion-exchange membrane 109 will simultaneously flow through the pores 108a of the second substrate 108 into the part of the channel between the second ion flow controlling element 107 and the second electrode 103.

Fig. 3c illustrates when the bias is reversed, and a negative potential is applied over the first electrode 102 and a positive potential is applied over the second electrode 103, meaning the ions will change direction. Electrolyte ion concentration in the pores 105a and 108a is lowered substantially. By this, the pores 105a, 108a of the substrates 105, 108 are effectively closed since no ions can pass the ion flow controlling elements 104 and 107. This will prevent ions from going back through the membrane and into the dilute part of the channel.

By this, the dilute channel is diluted of ions while the part of the channel 101 between the first ion flow controlling element 104 and the first electrode 102 will over time be enriched in anions and the part of the channel 101 between the second ion flow controlling element 107 and the second electrode 104 will be enriched in cations.

It should of course be understood that the ion-selectivity of the first 106 and second 109 ion-exchange membrane, as well as the potential over the first 102 and second 103 electrodes in the forward and reversed bias may be the opposite.

Returning again to Fig. 1a, the device 100 may further comprise a bypass channel 110 connecting the space between the first electrode 102 and the first side 104a of the first ion flow controlling element 104 to the space between the second electrode 103 and the first side 107a of the second ion flow controlling element 107. The bypass channel 110 helps avoiding build up of net charges.

The bypass channel 110 may comprise a valve, such as a fluidic valve for opening and closing the passage through the channel 110. The valve may for instance be open while no or low voltage is applied over the device 100.

The surface area of the device 100 may be 10 µm² to 10 m².

The surface area of the device 100 may depend on the application of the device 100. For instance, a single device 100 may have a surface area of 10 um². For medical dialysis, the device 100 may have a surface area or 1 to 100 cm². For seawater desalination, the device 100 may have a surface area of 0.1 to 10 m².

Fig 1b illustrates the device 200 for electrodialysis in a coaxial configuration. The device 200 works in the same way as the device 100 described in reference to Fig. 1a. Thus, the functions of the device 200 will not be further described here.

The device 200 comprises a first electrode 202 arranged as a mantle surface of a second cylinder inside of a second electrode 203 arranged as a mantle surface of a second cylinder around the first electrode 202. A flow of electrolytes 201 is received in a channel 201 arranged between the first electrode 202 and the second electrode 203. The channel 201 is in Fig 1b extending into the image plane.

The device 200 further comprises a first ion controlling element 204 arranged as a mantle surface of a third cylinder arranged surrounding the first electrode 202 but inside of the mantle surface of the second cylinder. The first ion flow controlling element 204 having a first side 204a facing the first electrode 202 and a second side 204b facing the second electrode 203. The first ion flow controlling element 204 being configured for allowing a flow of ions form the second side 204b to the first side 204a. The first ion controlling element 204 comprising a first substrate 205 and a first ion-exchange membrane 206. The first substrate 205 comprises pores 205a extending through the first substrate 205. The first ion-exchange membrane 206 covers the pores 205a of the first substrate 205.

The device 200 further comprises a second ion controlling element 207 arranged as a mantle surface of a cylinder arranged surrounding the first ion flow controlling element 204 but inside of the mantle surface of the second cylinder, being the second electrode 203. The second ion flow controlling element 207 having a first side 207a facing the second electrode 203 and a second side 207b facing the first electrode 201. The second ion flow controlling element 207 being configured for allowing a flow of ions from the second side 207b to the first side 207a. The second ion controlling element 207 comprising a first substrate 208 and a second ion-exchange membrane 209. The second substrate 208 comprises pores 208a extending through the second substrate 208. The second ion-exchange membrane 209 covers the pores 208a of the second substrate 208.

Fig. 4 illustrates the first ion flow controlling element 104 and the second ion flow controlling element 107. The features already discussed in the previous figures are for means of simplicity not mentioned again.

The pores 105a of the first substrate 105 and the pores 108a of the second substrate may be a single pore or an array of pores. In Fig. 4, an array of pores is disclosed. The pores 105a, 108a may be arranged, e.g., in a hexagonal or rectangular pattern, or in an irregular pattern.

The density of pores 105a, 108a, in other words the pore-to-pore distance H, may be optimized toward effectiveness of ion separation and efficiency in electrodialysis. That is, pore-to-pore distances H may advantageously be as short as possible to have high ion flux per surface area but should be large enough so that individual pores do not interfere with one another. The pores 105a of the first substrate 105 and the pores 108a of the second substrate 108 have a diameter D of 10 nm to 1 mm. The ratio of pore diameter D to pore-to-pore distance H may range from approximately 1:1 to 1:100.

The cross section of the pores 105a, 108a can be circular/disc-shaped, rectangular, quadratic, or irregular. The cross section can be constant along the length L of the pore 105a, 108a. Alternatively, the cross-section or diameter D can change along length L of the pore, e.g., a tapered pore.

The thickness of the first substrate 105 and the second substrate 108 are 100 nm to 1 mm. The thickness of the substrate 105, 108 is identical to the length of the pores 105a, 108a, the pores 105a, 108a extending through the substrate 105, 108.

The pores may be defined and fabricated in the first substrate 105 and in the second 108 substrate by various methods including wet etching, dry/plasma etching, substrate moulding (soft lithography), photolithography, injection moulding, additive manufacturing, laser cutting, track etching, electrochemical etching, photoelectrochemical etching, or mechanical punching.

The first ion-exchange membrane 106 may extend into the pores 105a of the first substrate 105. The second ion-exchange membrane 109 may extend into the pores 108a of the second substrate 108.

The first substrate 105 and the second substrate 108 may comprise polymers, such as polyethylene terephthalate (PET), poly(methyl methacrylate) (PMMA), polytetrafluoroethylene (PTFE, Teflon), or cyclic olefin copolymer (COC), polyimide (Kapton), or glass, silicon or oxidized, silicon, or silicon or another solid-state material.

Accordingly, the first substrate 105 and the second substrate 108 may comprise an inert material.

Thus, the first 105 and the second substrate 108 may not be part of the ion blocking provided by the ion-selective membrane 106, 109.

Now, the ion-exchange membrane 106, 109 will be discussed in relation to Figs 4a-4c. It should be understood that the first 106 and second 109 ion-exchange membrane may respectively be an ion-exchange membrane which is configured for separating anions from cations. However, the first 106 and second 109 ion-exchange membrane may alternatively, respectively be an ion-selective membrane configured such that the first and second ion-exchange membrane contains ionophores. If so, the membrane can separate a type of cations from other cations or a specific anion from other anions.

As is disclosed in Fig. 5, the first ion-exchange membrane 106 may comprise at least a first portion 106a and a second portion 106b. The first portion 106a and the second portion 106b may be selective for different kinds of ions. The second ion-exchange membrane 109 may comprise at least a first portion 109a and a second portion 109b, wherein the first portion 109a and the second portion 109b may be selective for different kinds of ions.

As an example, the first portion 106a of the first ion-exchange membrane 106 may be selective for a first cation and the second portion 106b of the first ion-exchange membrane 106 may be selective for a first anion. At the same time, the first portion 109a of the second ion-exchange membrane 109 is selective for a second cation and the second ion-exchange membrane 109 is selective for a second anion. The first cation and the second cation may be different cations. The first anion and the second anion may be different anions. However, the cations may be the same kind of cations and the anions may be the same kind of anions.

By this, the first ion flow controlling element 104 may be selective for two kinds of ions, and the second ion flow controlling element 107 may be selective for two kinds of ions.

Thus, the first ion flow controlling element 104 may enrich the flow of electrolytes in the part of the channel 101 between the first ion flow controlling element 104 and the first electrode 102 with the ions specific for the selectivity of the first ion controlling element 104. The second ion flow controlling element 107 may enrich the flow of electrolytes in the part of the channel 101 between the second ion flow controlling element 107 and the second electrode 103 with the ions specific for the selectivity of the second ion controlling element 107.

The first portion 106a of the first ion-exchange membrane 106 and the first portion 109a of the second ion-exchange membrane 109 may have the same ion selectivity, and wherein the second portion 106b of the first ion-exchange membrane 106 and the second portion 109b of the second ion-exchange membrane 109 may have the same ion selectivity. However, it should be understood that the first portion 106a of the first ion-exchange membrane 106 and the first portion 109a of the second ion-exchange membrane 109 may have different ion selectivity as well. The second portion 106b of the first ion-exchange membrane 106 and the second portion 109b of the second ion-exchange membrane 109 may as well have different ion selectivity.

As is disclosed in Fig 4b, the first portion 106a of the first ion-exchange membrane 106 may be opposite to the second portion 109b of the second ion-exchange membrane 109 and wherein the second portion 106b of the first ion-exchange membrane 106 may be opposite to the first portion 109b of the second ion-exchange membrane 109.

As is disclosed in Fig. 5c, the first ion-exchange membrane 106 may comprise a plurality of first portions 106a and a plurality of second portions 106b arranged in an alternate configuration and wherein the second ion-exchange membrane 109 may comprise a plurality of first portions 109a and a plurality of second portions 109b arranged in an alternate configuration.

At least a portion 106a, 106b of the first ion-exchange membrane 106 may be selective for cations and at least a portion 109a, 109b of the second ion-exchange membrane 109 may be selective for anions.

At least a portion 106a, 106b of the first ion-exchange membrane 106 is selective for a specific ion. At least a portion 109a, 109b of the second ion-exchange membrane 109 may be selective for a second specific ion.

If the first portion 106a of the first ion-exchange membrane 106 is selective for the same ion as the first portion 109a of the second ion selective membrane 109 and the second portion 106b of the first ion-exchange membrane 106 is selective for the same ion and the second portion 109b of the second ion-exchange membrane 109, then the ion solution in the part of the channel between the first ion flow controlling element 104 and the first electrode 102 will be identical to the ion solution in the part of the channel 101 between the second ion flow controlling element 107 and the second electrode 103. This may give an effective dilution of the dilute channel.

However, the ion selectivity of the first portion 106a of the first ion-exchange membrane 106 may differ from the ion selectivity of the first portion 109a of the second ion-exchange membrane 109. Then, the ion solution in the part of the channel between the first ion flow controlling element 104 and the first electrode 102 will be enriched in the ion selected by the first ion-selective membrane 104 whilst the ion solution in the part of the channel between the second ion flow controlling element 107 and the second electrode 103 will be enriched in the ion selected by the second ion-selective membrane 109.

Fig. 6 discloses a method 300 for electrodialysis. The method 300 comprises receiving 301 a flow of an electrolyte in a channel 101. When received 301, the flow of electrolyte is identical in the entire channel 101.

The method 300 further comprises applying 302 an alternating current voltage across a first electrode 102 and a second electrode 103. The first 102 and second 103 electrode are arranged to extend along the channel 101 and spaced apart such that the flow of the electrolyte passes between the electrodes 102, 103.

When the alternating current voltage is applied across the first 102 and second 103 electrode, a positive potential is applied over, for example the first electrode 102 and a negative potential is applied over the second electrode 103, however it should be understood that the potential may be vice versa.

The method 300 further comprises controlling 303 the flow of ions from a second side 104b to a first side 104a of a first ion flow controlling element 104. As is already discussed, the first ion flow controlling element 104 is arranged to extend along the extension of the first electrode 102. The first ion flow controlling element 104 has a first side 104a facing the first electrode 102 and a second side 104b facing the second electrode 103. The first ion flow controlling element 104 comprises a first substrate 105 and a first ion-exchange membrane 106. The first substrate 105 comprises pores 105a extending through the first substrate 105 and wherein the first ion-exchange membrane 106 covers the pores 105a of the first substrate 105.

The method 300 further comprises controlling 304 flow of ions from a second side 107b to a first side 107a of a second ion flow controlling element 107. As is already discussed, the second ion flow controlling element 107 is arranged to extend along the extension of the second electrode 103. The second ion flow controlling element 107 has a first side 107a facing the second electrode 103 and a second side 107b facing the first electrode 102. The second ion flow controlling element 107 comprising a second substrate 108 and a second ion-exchange membrane 109. The second substrate 108 comprises pores 108a extending through the second substrate 108 and the second ion-exchange membrane 109 covers the pores 108a of the second substrate 108.

Thus, the ion flow controlling element 104, 107, enables preferential transport of ions as a function of the alternating current voltage across the first electrode 102 and the second electrode 103 and the orientation of the first ion flow controlling element 104 and the second ion flow controlling element 107.

The first 106 and second 109 ion-exchange membranes are configured such that they are selective for one type of ion. Thus, the first 106 and second 109 ion-exchange membranes will, respectively, be selective for a type of ion such that the specific type of ion will be absorbed from the flow of electrolytes to the respective first and second ion-exchange membrane.

As an example, the first ion-exchange membrane 106 may be selective for anions and the second ion-exchange membrane 109 is selective for cations. Then, anions from the flow of electrolytes will to a large extent be absorbed from the dilute channel to the first ion-selective membrane 106. Cations from the flow of electrolytes will to a large extent be absorbed from the dilute channel to the second ion-selective membrane 109.

When a forward bias is applied 301 over the first 104 and second 107 ion flow controlling element, the ions flow through the pores 105a, 108a of the first 105 and second 108 substrate, respectively. Cations may travel in a direction towards a negative electrode, while anions travel in a direction towards a positive electrode. This may be called an open state of the pores. During the open state, ions may flow in through the first 104 and second 106 ion flow controlling element in both directions depending on the polarization of the respective first 102 and second 103 electrode.

Following the example above, a positive potential is applied over the first electrode 102 and a negative potential is applied over the second electrode 103, in the forward bias of the alternate current. The anions from the first ion-selective membrane 106 will then flow through the pores 105a of the first substrate 105 into the part of the channel between the first ion flow controlling element 104 and the first electrode 102. Cations from the second ion-selective membrane 109 will simultaneously flow through the pores 108a of the second substrate 108 into the part of the channel between the second ion flow controlling element 107 and the second electrode 103.

When the bias is reversed, and a negative potential is applied over the first electrode 102 and a positive potential is applied over the second electrode 103, the ions will change direction. Consequently, the pores 105a and 108a will to a large extent be depleted of electrolyte cations and anions. By this, the pores 105a, 108a of the substrates 105, 108 are effectively closed since only a small amount of ions can pass the first ion-selective membrane 106 towards the first electrode 102 and only a small amount of ions can pass the second ion-selective membrane 109 towards the second electrode 103. This will prevent fouling of the device as well as gas formation.

By this, the dilute channel is diluted of ions while the part of the channel 101 between the first ion flow controlling element 104 and the first electrode 102 will over time be enriched in ions and the part of the channel 101 between the second ion flow controlling element 107 and the second electrode 104 will be enriched in ions.

It should of course be understood that the ion-selectivity of the first 106 and second 109 ion-exchange membrane, as well as the potential over the first 102 and second 103 electrodes in the forward and reversed bias may be the opposite.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. A device (100) for electrodialysis, the device (100) comprising:
a channel (101) configured for receiving a flow of an electrolyte;
a first electrode (102) and a second electrode (103), wherein the first (102) and second electrode (103) are arranged to extend along the channel (101) and spaced apart such that the flow of the electrolyte passes between the electrodes (102, 103), wherein the first (102) and second electrode (103) are electrically connected for applying an alternating current voltage across the first (102) and second (103) electrode;
a first ion flow controlling element (104) arranged to extend along the extension of the first electrode (102), the first ion flow controlling element (104) having a first side (104a) facing the first electrode and a second side (104b) facing the second electrode (103), the first ion flow controlling element (104) being configured to allow flow of ions from the second side (104b) to the first side (104a), the first ion flow controlling element (104) comprising a first substrate (105) and a first ion-exchange membrane (106), wherein the first substrate (105) comprises pores (105a) extending through the first substrate (105) and wherein the first ion-exchange membrane (106) covers the pores (105a) of the first substrate (105);
a second ion flow controlling element (107) arranged to extend along the extension of the second electrode (103), the second ion flow controlling element (107) having a first side (107a) facing the second electrode (103) and a second side (107b) facing the first electrode (102), the second ion flow controlling element (107) being configured to allow flow of ions from the second side (107b) to the first side (107a), the second ion flow controlling element (107) comprising a second substrate (108) and a second ion-exchange membrane (109), wherein the second substrate (108) comprises pores (108a) extending through the second substrate (108) and wherein the second ion-exchange membrane (109) covers the pores (108a) of the second substrate (108).

2. A device (100) for electrodialysis according to claim 1, wherein the first ion-exchange membrane (106) comprises at least a first portion (106a) and a second portion (106b), wherein the first portion (106a) and the second portion (106b) are selective for different kinds of ions and wherein the second ion-selective membrane (109) comprises at least a first portion (109a) and a second portion (109b), wherein the first portion (109a) and the second portion (109b) are selective for different kinds of ions.

3. A device (100) for electrodialysis according to claim 2, wherein the first portion (106a) of the first ion-exchange membrane (106) and the first portion (109a) of the second ion-exchange membrane (109) have the same ion selectivity, and wherein the second portion (106b) of the first ion-exchange membrane (106) and the second portion (109b) of the second ion-exchange membrane (109) have the same ion selectivity.

4. A device (100) for electrodialysis according to any one of claim 2 or 3, wherein the first ion-exchange membrane (106) comprises a plurality of first portions (106a) and a plurality of second portions (109a) arranged in an alternate configuration and wherein the second ion-exchange membrane (109) comprises a plurality of first portions (109a) and a plurality of second portions (109b) arranged in an alternate configuration.

5. A device (100) for electrodialysis according to any one of claims 2 to 4, wherein the first portion (106a) of the first ion-exchange membrane (106) is opposite to the second portion (109b) of the second ion-exchange membrane (109) and wherein the second portion (106b) of the first ion-exchange membrane (106) is opposite to the first portion (109a) of the second ion-exchange membrane (109).

6. A device (100) for electrodialysis according to any one of claims 1 to 5, wherein at least a portion (106a, 106b) of the first ion-exchange membrane (106) is selective for cations and at least a portion (109a, 109b) of the second ion-exchange membrane (109) is selective for anions.

7. A device (100) for electrodialysis according to any one of claims 1 to 5, wherein at least a portion (106a, 106b) of the first ion-exchange membrane (106) is selective for a specific ion.

8. A device (100) for electrodialysis according to any one of claims 1 to 7, wherein the device (100) comprises a third ion flow controlling element (111) arranged to extend along the extension of the first electrode (102), the third ion flow controlling element (111) being arranged between the first ion flow controlling element (104) and the first electrode (102), the third ion flow controlling element (111) having a first side (111a) facing the first ion flow controlling element (104) and a second side (111b) facing the first electrode (102), the third ion flow controlling element (111) being configured to allow flow of ions from the second side (111b) to the first side (111a), the third ion flow controlling element (111) comprising a third substrate (112) and a third ion-exchange membrane (113), wherein the third substrate (112) comprises pores (112a) extending through the third substrate (112) and wherein the third ion-exchange membrane (113) covers the pores (112a) of the third substrate (112), the third substrate (112) facing the first substrate (105) of the first ion flow controlling element (104), wherein the device (100) further comprises a fourth ion flow controlling element (114) arranged to extend along the extension of the second electrode (103), the fourth ion flow controlling element (114) being arranged between the second ion flow controlling element (107) and the second electrode (103), the fourth ion flow controlling element (114) having a first side (114a) facing the second ion flow controlling element (107) and a second side (114b) facing the second electrode (103), the fourth ion flow controlling element (114) being configured to allow flow of ions from the second side (114b) to the first side (114a), the fourth ion flow controlling element (114) comprising a fourth substrate (115) and a fourth ion-exchange membrane (116), wherein the fourth substrate (115) comprises pores (115a) extending through the fourth substrate (115) and wherein the fourth ion-exchange membrane (116) covers the pores (115a) of the fourth substrate (115), the fourth substrate (115) facing the second substrate (108) of the second ion flow controlling element (107).

9. A device (100) for electrodialysis according to any one of claims 1 to 8, wherein the first substrate (105) and the second substrate (108) comprises polymers, such as polyethylene terephthalate (PET), poly(methyl methacrylate) (PMMA), polytetrafluoroethylene (PTFE, Teflon), or cyclic olefin copolymer (COC), polyimide (Kapton), or glass, silicon or oxidized, silicon, or silicon or another solid-state material.

10. A device (100) for electrodialysis according to any one of claims 1 to 9, wherein the surface area of the device (100) 10 µm² to 10 m².

11. A device (100) for electrodialysis according to any one of claims 1 to 10, wherein the pores (105a) of the first substrate (105) and the pores (108a) of the second substrate (108) have a diameter of 10 nm to 1 mm.

12. A device (100) for electrodialysis according to any one of claims 1 to 11, wherein the first ion-exchange membrane (106) and the second ion-exchange membrane (109) comprises Nafion, Sustainion, Aquivion, polymers of intrinsic porosity, such as intrinsically microporous polyamine PIM-EA-TB, polyacrylonitrile, Fumasep, cellulose, or other proton-exchange membrane materials.

13. A device (100) for electrodialysis according to any one of claims 1 to 12, wherein the device (100) has a parallel-plate configuration.

14. A device (100) for electrodialysis according to any one of claims 1 to 12, wherein the device (100) has a coaxial configuration.

15. A method (200) for electrodialysis, the method (200) comprising:
receiving (201) a flow of an electrolyte in a channel (101);
applying (202) an alternating current voltage across a first electrode (102) and a second electrode (103), wherein the first (102) and second (103) electrode are arranged to extend along the channel (101) and spaced apart such that the flow of the electrolyte passes between the electrodes (102, 103);
controlling (203) flow of ions from a second side (104b) to a first side (104a) of a first ion flow controlling element (104), wherein the first ion flow controlling element (104) is arranged to extend along the extension of the first electrode (102), the first ion flow controlling element (104) having a first side (104a) facing the first electrode (102) and a second side (104b) facing the second electrode (103), the first ion flow controlling element (104) comprising a first substrate (105) and a first ion-exchange membrane (106), wherein the first substrate (105) comprises pores (105a) extending through the first substrate (105) and wherein the first ion-exchange membrane (106) covers the pores (105a) of the first substrate (105);
controlling (204) flow of ions from a second side (107b) to a first side (107a) of a second ion flow controlling element (107) arranged to extend along the extension of the second electrode (103), the second ion flow controlling element (107) having a first side (107a) facing the second electrode (103) and a second side (107b) facing the first electrode (102), the second ion flow controlling element (107) comprising a second substrate (108) and a second ion-selective membrane (109), wherein the second substrate (108) comprises pores (108a) extending through the second substrate (108) and wherein the second ion-exchange membrane (109) covers the pores (108a) of the second substrate (108).
